# EUROPÄISCHE PATENTANMELDUNG

(11) **EP 1 154 615 A2**
(43) Veröffentlichungstag der Anmeldung: **14.11.2001**
(21) Anmeldenummer: 01110772.9
(22) Anmeldetag: 03.05.2001
(51) Int. Cl.: H04M 1/02, H04M 1/18

(54) **Mobiltelefon, bestehend aus einer Unterschale und einer Oberschale**

(30) Priorität: 10.05.2000 DE 10022706
(71) Anmelder: SIEMENS AKTIENGESELLSCHAFT, 80333 München (DE)
(72) Erfinder: Beeker, Udo, 46509 Xanten (DE); Kremers, Arndt, 52066 Aachen (DE); Voigt, Christian, 46509 Xanten (DE)

(57) **Zusammenfassung**

Zwischen Unterschale und Oberschale ist eine Einlegedichtung vorgesehen, welche im Querschnitt eine Doppeltrapez-Struktur aufweist und an ihren seitlichen Längsflanken umlaufende Dichtlippen besitzt.
In den umlaufenden Kanten der Gehäuseschalen sind trapezförmige sich nach außen hin erweiternde Nuten vorgesehen, deren Querschnitte gegenüber den entsprechenden Querschnittsabschnitten der Einlegedichtung ein vorgegebenes Übermaß aufweist.

## Beschreibung

Die vorliegende Erfindung betrifft ein Mobiltelefon, bestehend aus einer Unterschale und einer Oberschale, wobei zwischen Unterschale und Oberschale eine Einlegedichtung vorgesehen ist.

Moderne Mobiltelefone werden nicht nur im Büro, im Auto und auf der Strasse, sondern in zunehmendem Maße auch während unterschiedlichster Freizeitaktivitäten benutzt, bei denen die Gefahr besteht, dass Festkörper, Staub und Feuchtigkeit in die Geräte eindringen können.

Ziel der Mobiltelefon-Entwicklung ist es daher, Mobiltelefone zu entwickeln, welche einer IP-Schutzklasse zugeordnet werden können. Die IP(= International Protection)-Schutzklasse klassifiziert die Systeme entsprechend ihres Schutzgrades gegen das Eindringen von Festkörpern, Staub und Feuchtigkeit. Die IP-Bezeichnung besteht aus zwei Ziffern, wobei die erste Ziffer den Schutzgrad gegen Staub und die zweite Ziffer den Schutzgrad gegen Feuchtigkeit angibt. Die erste Ziffer kann von 0 bis 6 und die zweite Ziffer von 0 bis 8 variieren. Dabei entspricht die Ziffer 0 keinem Schutzgrad. Zum Beispiel bedeutet eine 5 als erste Ziffer, dass das Gerät gegen Staub geschützt ist, und eine 6 als erste Ziffer bedeutet, dass das Gerät vollkommen staubdicht ist. Eine 4 als zweite Ziffer besagt, dass das Gerät gegen Spritzwasser geschützt ist, während zum Beispiel eine 5 als zweite Ziffer aussagt, dass das Gerät gegen einen Wasserstrahl geschützt ist.

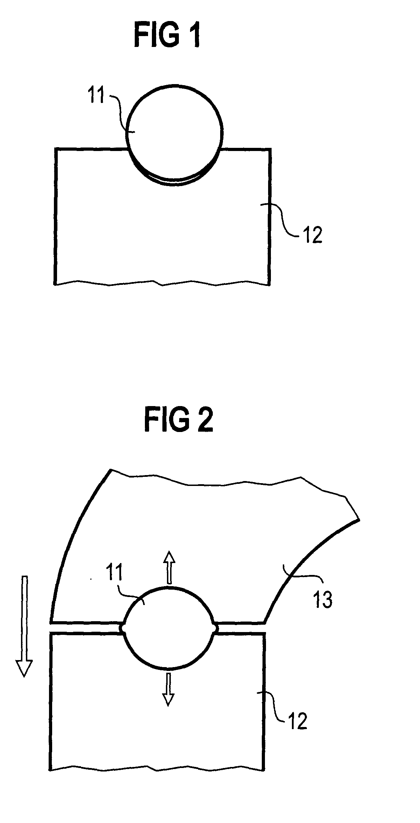

Die Figuren 1 und 2 zeigen die herkömmliche Art der Abdichtung zwischen einer Oberschale und einer Unterschale eines Mobiltelefons mit Hilfe von O-förmigen Dichtungsringen 11. Diese Dichtungsringe 11 werden in die Ausnahme einer Unterschale 12 gelegt, worauf die Oberschale 13 auf die die Unterschale 12 mit dem Dichtungsring 11 aufgebracht wird, wobei die Oberschale 13 ebenfalls eine kreisförmige Aufnahmenut aufweist.

Der Nachteil dieses bekannten Dichtungsrings besteht darin, dass zur Gewährleistung einer ausreichenden Dichtwirkung der Dichtungsring 11 erheblich deformiert werden muss, damit er sich an die Gehäusekontur anschmiegt. Eine solche Verformung bedarf jedoch sehr hoher und vor allem definierter Kräfte in Verschlussrichtung der Gehäusehälften (die Verschlussrichtung ist in Figur 2 durch den Pfeil angedeutet). Häufig ist es aber auf Grund des eingesetzten Verschlusssystems nicht möglich, die Schließkräfte zu kontrollieren, gleichmäßig zu verteilen und in ausreichender Höhe auf die Dichtung aufzubringen. Hier versagt die Lösung mit einem O-förmigen Dichtungsring.

Ein weiterer Nachteil der bekannten Lösung stellt die Art der Vormontage dar. Der Dichtungsring kann nur lose eingelegt werden und kann daher währen der Endmontage sehr leicht verrutschen bzw. ganz herausfallen.

Aufgabe der vorliegenden Erfindung ist es, ein Mobiltelefon, bestehend aus einer Unterschale und einer Oberschale und mit einer Einlegedichtung zwischen Unterschale und Oberschale anzugeben, bei welchem eine möglichst hohe IP-Schutzklasse erreicht wird, gleichzeitig aber nur geringe definierte Kräfte in Verschlussrichtung aufgebracht werden müssen.

Diese Aufgabe wird erfindungsgemäß für das eingangs genannte Mobiltelefon dadurch gelöst, dass die Einlegedichtung im Querschnitt eine Doppeltrapez-Struktur aufweist, wobei sich die einzelnen trapezförmigen Bereiche nach außen hin verjüngen und an ihren seitlichen Längsflanken umlaufende Dichtlippen aufweisen, dass in den umlaufenden Kanten der Gehäuseschalen trapezförmige sich nach außen hin erweiternde Nuten vorgesehen sind, wobei der Querschnitt der Nuten gegenüber dem entsprechenden Querschnittsabschnitt der Einlegedichtung ein vorgegebenes Übermaß aufweist.

Bei dem erfindunggemäßen Mobiltelefon wird eine hohe IP-Schutzklasse für die Abdichtung zwischen Oberschale und Unterschale erreicht. Gleichzeitig müssen beim Zusammenfügen von Oberschale und Unterschale nur geringe Kräfte in Verschlussrichtung der beiden Gehäusehalbschalen aufgebracht werden.

Weitere zweckmäßige Weiterbildungen und Ausgestaltungen der Erfindung ergeben sich aus den Unteransprüchen, sowie aus der nachfolgenden Beschreibung eines Ausführungsbeispiels anhand der Zeichnung.

Es zeigen
- Figur 1: eine Querschnittsansicht einer herkömmliche Dichtung zum Abdichten des Zwischenraums zwischen einer Ober- und einer Unterschale in Verbindung mit einer Unterschale vor dem Zusammenfügen,
- Figur 2: eine Querschnittsansicht einer herkömmliche Dichtung nach Fig. 1 im zusammengefügten Zustand,
- Figur 3: eine Querschnittsansicht einer gemäß der vorliegenden Erfindung aufgebaute Dichtung zum Abdichten des Zwischenraums zwischen einer Ober- und einer Unterschale in Verbindung mit einer Unterschale vor dem Einfügen,
- Figur 4: eine Querschnittsansicht einer gemäß der vorliegenden Erfindung aufgebaute Dichtung zum Abdichten des Zwischenraums zwischen einer Ober- und einer Unterschale in Verbindung mit einer Unterschale nach dem Einlegen der Einlegedichtung, und
- Figur 5: eine Querschnittsansicht einer gemäß der vorliegenden Erfindung aufgebaute Dichtung zum Abdichten des Zwischenraums zwischen einer Ober- und einer Unterschale im zusammengefügten Zustand.

Im Folgenden wird eine Einlegedichtung beschrieben, mit deren Hilfe eine Abdichtung zweier Gehäusehälften gegen Wasser und Staub entlang der Trennungslinie zwischen Ober- und Unterschale eines Mobiltelefons gewährleistet wird. Hierbei ist entscheidend, dass die zur Dichtung notwendige Dichtkraft keine bzw. nur sehr geringe Komponenten in Verschlussrichtung aufweist.

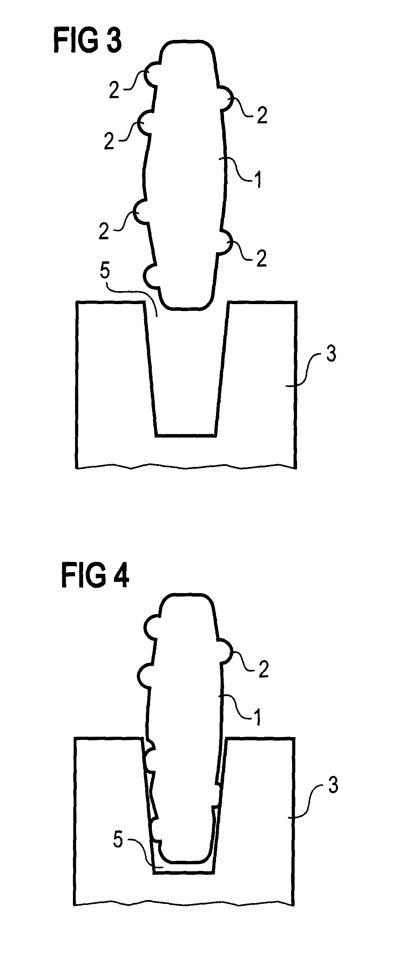

In den Figuren 3 bis 5 ist eine Abdichtung zwischen einer Unterschale 3 und einer Oberschale 4 gemäß der vorliegenden Erfindung dargestellt. Alle Figuren zeigen Querschnittsansichten, wobei von der Unter- bzw. Oberschale nur der relevante Teil gezeigt ist.

Die erfindungsgemäße Einlegedichtung 2 weist im Querschnitt eine Doppel-Trapezstruktur auf, wobei sich die einzelnen trapezförmigen Bereiche nach außen hin verjüngen. An ihren Längsflanken weist die Einlegedichtung 1 umlaufende Dichtlippen 2 auf.

Die umlaufenden Dichtlippen können zum Beispiel einen halbkreisförmigen Querschnitt aufweisen. Die Anzahl der Dichtlippen 2 auf beiden Seiten der Einlegedichtung 1 kann entsprechend der verlangten Dichtwirkung variiert werden. Die Einlegedichtung 1 wird zuerst in eine Nut 5 in der Unterschale 3 eingelegt. Der Querschnitt der Nut 5 entspricht der Grundkontur der Einlegedichtung 1, allerdings mit einem vorgegebenen Übermaß.

Auf Grund des vorgegebenen Übermaßes gegenüber der Grundkontur der Einlegedichtung 1 werden die aufgesetzten Dichtlippen 2 beim Einbringen der Einlegedichtung 1 in die Nut 5 deformiert. Die Einlegedichtung 1 sitzt daher nach dem Einlegen fest in der Unterschale 3.

Danach wird die Oberschale 4 auf die Unterschale 3 mit der eingelegten Einlegedichtung 1 aufgebracht. Die prinzipielle Wirkungsweise zwischen der Einlegedichtung 1 und der Oberschale 4 ist dieselbe wie zwischen der Einlegedichtung 1 und der Unterschale 3.

Durch die seitliche Position der Dichtlippen 2, welche die eigentliche Dichtungsaufgabe übernehmen, wirken die Dichtkräfte nahezu waagerecht. Und trotzdem wird auf Grund der Dichtlippen 2 eine hohe Abdichtung zwischen den Gehäuseschalen erreicht.

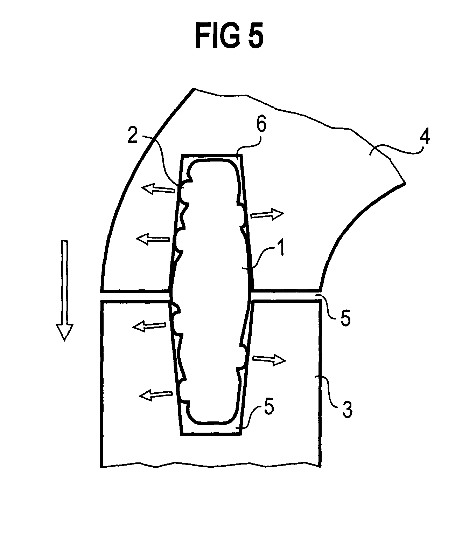

Die erfindungsgemäße Abdichtung weist folgende Vorteile auf:
- Die Dichtkräfte wirken nahezu nicht in Richtung der Verschlusskraft, welche in Figur 5 durch einen Pfeil gekennzeichnet ist.
- Durch die Kontur der Dichtnut und der Einlegedichtung selbst ist die Verteilung der Dichtkraft entlang der Dichtung gleichmäßig und reproduzierbar.
- Der Kraftschluss in der Unterschale ermöglicht eine einfache Vormontage.

Mit Hilfe der erfindungsgemäßen Abdichtung ist es möglich, die Richtung der Dichtkräfte so zu verlagern, dass sie nicht mehr in Verschlussrichtung wirken, wobei gleichzeitig eine hohe Dichtwirkung erzielt wird.

## Patentansprüche

1. Mobiltelefon, bestehend aus einer Unterschale und einer Oberschale, wobei zwischen Unterschale und Oberschale eine Einlegedichtung vorgesehen ist,
**dadurch gekennzeichnet,**
**dass** die Einlegedichtung (1) im Querschnitt eine Doppeltrapez-Struktur aufweist, wobei sich die einzelnen trapezförmigen Bereiche nach außen hin verjüngen und an ihren seitlichen Längsflanken umlaufende Dichtlippen (2) aufweisen,
**dass** in den umlaufenden Kanten der Gehäuseschalen (3, 4) trapezförmige sich nach außen hin erweiternde Nuten (5, 6) vorgesehen sind,
wobei der Querschnitt der Nuten (5, 6) gegenüber dem entsprechenden Querschnittsabschnitt der Einlegedichtung (1) ein vorgegebenes Übermaß aufweist.
2. Mobiltelefon nach Anspruch 1,
**dadurch gekennzeichnet,**
**dass** an jeder seitlichen Längsflanke eines trapezförmigen Bereichs mindestens eine Dichtlippe vorgesehen ist.
3. Mobiltelefon nach Anspruch 2,
**dadurch gekennzeichnet,**
**dass** die Dichtlippen (2) einen halbkreisförmigen Querschnitt aufweisen.
